# FASCICULE DE BREVET EUROPEEN

(11) **EP 3 387 024 B1**
(45) Date de publication et mention de la délivrance du brevet: **26.07.2023**
(21) Numéro de dépôt: 16809754.1
(22) Date de dépôt: 07.12.2016
(51) Int. Cl.: C08F 2/38, C08F 2/40, C08F 210/02, C08F 236/06

(54) **COPOLYMÈRE MONOFONCTIONNEL OU TÉLÉCHÉLIQUE DE 1,3-DIÈNE ET D'ÉTHYLÈNE OU D'ALPHA-MONOOLÉFINE**
MONOFUNKTIONELLES ODER TELECHELES COPOLYMER VON 1,3-DIEN UND ETHYLEN ODER ALPHA-MONOOLEFIN
MONOFUNCTIONAL OR TELECHELIC COPOLYMER OF 1,3-DIENE AND ETHYLENE OR ALPHA-MONOOLEFIN

(30) Priorité: 08.12.2015 FR 1562012
(43) Date de publication de la demande: 17.10.2018
(73) Titulaire: Compagnie Générale des Etablissements Michelin, 63000 Clermont-Ferrand (FR)
(72) Inventeur: THUILLIEZ, Julien, 63040 Clermont-Ferrand Cedex 9 (FR); BOISSON, Christophe, 01390 Tramoyes (FR); D'AGOSTO, Franck, 69740 Genas (FR); NORSIC, Sébastien, 69006 Lyon (FR); MACQUERON, Benoît, 75016 Paris (FR)
(74) Mandataire: Gandon-Pain, Sylvie
(86) Numéro de dépôt international: PCT/EP2016/080064
(87) Numéro de publication internationale: WO 2017/097829

(56) Documents cités:
- WO-A1-2004/035639
- WO-A1-2010/139449
- WO-A1-2010/139450
- WO-A1-2016/092227
- FR-A1- 2 987 838
- US-A1- 2011 028 657
- Thomas Chenal ET AL: "End-capped Oligomers of Ethylene, Olefins and Dienes, by means of Coordinative Chain Transfer Polymerization using Rare Earth Catalysts" In: "Oligomerization of Chemical and Biological Compounds", 18 juin 2014 (2014-06-18), InTech, XP055293852, ISBN: 978-953-51-1617-2 DOI: 10.5772/58217, le document en entier

## Description

La présente invention concerne des copolymères de diène conjugué et de monooléfine, lequel copolymère porte au moins un groupe fonctionnel, ainsi que leur procédé de préparation.

Il est toujours d'intérêt d'avoir à disposition de nouveaux polymères afin d'élargir la gamme de matériaux déjà disponibles et améliorer les fonctionnalités des matériaux déjà existants. Généralement, le développement de nouveaux polymères est motivé pour améliorer les performances des matériaux déjà existants.

Parmi les voies d'accès à de nouveaux polymères, on peut citer la modification de polymères déjà connus. La modification de polymères déjà connus peut consister en une modification post-polymérisation, modification qui a lieu sur le polymère au préalable synthétisé, comme par exemple la réaction d'hydrogénation ou le greffage de fonction le long de la chaîne polymère, en la copolymérisation d'un monomère fonctionnel, en l'utilisation d'un agent de fonctionnalisation dans la réaction de terminaison de la chaîne polymère ou dans la réaction d'amorçage de la chaîne polymère.

Les Demanderesses ont déjà mis au point la synthèse de copolymères de diène conjugué et de monooléfine, décrite par exemple dans les demandes de brevet EP 1092 731, WO 2004035639, WO2005028526, WO 2007054223 et WO 2007054224. Dans ses efforts de modifier les propriétés de ces copolymères, les Demanderesses ont découvert un nouveau procédé qui permet d'apporter au moins une fonction à ces copolymères et d'accéder ainsi à la synthèse de nouveaux copolymères. Ce procédé qui a recours à un agent de transfert fonctionnel permet non seulement la synthèse de copolymère de diène conjugué et de monooléfine, lequel copolymère porte une fonction sur une extrémité de la chaîne copolymère, mais aussi ouvre la voie à la synthèse de copolymères de diène conjugué et de monooléfine téléchéliques ou hétéro-téléchéliques.

Ainsi, un premier objet de l'invention est un copolymère comprenant une chaîne copolymère A portant une fonction B choisie dans le groupe constitué par les fonctions B1 et B2,
- la chaîne copolymère A étant une chaîne copolymère comprenant des unités monomères M1 et des unités monomères M2, M1 étant un diène conjugué,
- B1 étant choisie dans le groupe constitué par N(SiMe₃)₂ ; N(SiMe₂CH₂CH₂SiMe₂) ; para-C₆H₄(NMe₂); para-C₆H₄(OMe) ; para-C₆H₄(N(SiMe₃)₂) ; ortho-CH₂-C₆H₄NMe₂ ; ortho-CH₂-C₆H₄OMe ; C₆F₅ ; C₃F₇ ; C₆F₁₃ ; CH(OCH₂CH₂O) ;
- B2 étant une fonction dérivant de B1.
- la fonction B étant portée en extrémité de la chaîne copolymère A,
- M2 étant l'éthylène ou un mélange d'éthylène et d'une α-monooléfine.

Un autre objet de l'invention est un procédé pour préparer le copolymère conforme à l'invention.

Un objet décrit par la présente est l'utilisation d'un agent de transfert de formule (III) dans la synthèse de copolymère conforme à l'invention,

Y((CH₂)_{d}B1)_{y} (III)

∘ y étant égal à 2 ou 3,
∘ lorsque y = 2, le symbole Y étant un alcalino-terreux ou le zinc, et lorsque y = 3, Y étant l'aluminium ;
∘ d étant un nombre entier de 0 à 50, avantageusement de 0 à 11 ;
∘ B1 étant choisi dans le groupe constitué par N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O).

L'invention concerne aussi un composé de formule (II), composé intermédiaire dans la synthèse du copolymère conforme à l'invention,

Y(A-(CH₂)_{d}-B1)_{y} (II)

dans laquelle Y, d, y, A et B1 sont tels que définis précédemment.

L'invention porte également sur une composition de caoutchouc comprenant le copolymère conforme à l'invention.

### 1. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction *in situ* des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Le copolymère conforme à l'invention a pour caractéristique essentielle de comprendre une chaîne copolymère A. La chaîne copolymère A comprend des unités monomères M1 et des unités monomères M2, M1 étant un diène conjugué et M2 étant l'éthylène ou un mélange d'éthylène et d'une α-monooléfine. Par définition, le pourcentage molaire respectif des unités monomères M1 et des unités monomères M2 dans la chaîne copolymère A est strictement supérieur à 0.

Les unités monomères M1 résultent de l'insertion du monomère M1, un diène conjugué, dans la chaîne copolymère A en croissance, notamment par une addition 1,2 ou 1,4. On entend par « un » diène conjugué un ou plusieurs diènes conjugués. Dans le cas où M1 représente un mélange de diènes conjugués, les unités monomères M1 désignent les unités monomères résultant de l'insertion de chacun des diènes conjugués.

Les unités monomères M2 résultent de l'insertion du monomère M2 dans la chaîne copolymère A en croissance. On entend par « une » α-monooléfine une ou plusieurs α-monooléfines. Dans le cas où M2 représente un mélange monomère, c'est à dire un mélange de plusieurs monomères, les unités monomères M2 désignent les unités monomères résultant de l'insertion de chacun des monomères du mélange monomère.

A titre de diène conjugué, on peut citer les 1,3-diènes, particulièrement un diène conjugué choisi dans groupe constitué par le 1,3-butadiène, l'isoprène et leur mélange. De préférence M1 est le 1,3-butadiène.

A titre d'α-monooléfine, conviennent les α-monooléfines aliphatiques ou aromatiques, particulièrement les α-monooléfines aliphatiques ayant de préférence 3 à 18 atomes de carbone telles que le propène, le 1-butène, le 1-hexène, le 1-octène, le 1-hexadécène ou leurs mélanges.

Selon un mode de réalisation de l'invention, les unités monomères M1 représentent plus de 40%, préférentiellement plus de 60% en mole des unités monomères du copolymère.

Selon un autre mode de réalisation de l'invention, les unités monomères M1 représentent moins de 35% en mole des unités monomères du copolymère.

Selon un mode de réalisation particulier de l'invention, les unités éthylène représentent plus de 50%, préférentiellement plus de 65% en mole des unités monomères du copolymère.

Selon un mode de réalisation préférentiel de l'invention, les unités monomères M1 contiennent plus de 80% en mole de motif résultant d'une insertion 1,4-trans de M1 dans la chaîne copolymère.

Selon l'un quelconque des modes de réalisation de l'invention, le copolymère contient de préférence moins de 0,5% en mole de motifs cycliques hydrocarbonés aliphatiques, de manière plus préférentielle est dépourvu de tels motifs, le motif cyclique contenant un cycle à 5 ou 6 atomes de carbone.

Selon un mode de réalisation avantageux de l'invention, le copolymère conforme à l'invention est un copolymère de M1 et de M2, notamment un copolymère de 1,3-butadiène et d'éthylène ou un terpolymère de 1,3-butadiène, d'éthylène et d'une α-monooléfine telle que définie précédemment.

Selon l'un quelconque des modes de réalisation de l'invention, le copolymère présente de préférence une masse molaire moyenne en nombre (Mn) d'au moins 5000 g/mol, de manière plus préférentielle d'au moins 60 000 g/mol, valeur minimum particulièrement avantageuse pour un usage du copolymère en tant qu'élastomère par exemple dans une composition de caoutchouc pour pneumatique. Généralement, sa masse molaire moyenne en nombre n'excède pas 1500 000 g/mol ; au-delà de cette valeur la viscosité du copolymère peut rendre l'utilisation du copolymère délicate. Il présente de préférence un indice de polydispersité *Ð*, égal à Mw/Mn (Mw étant la masse molaire moyenne en poids) compris entre 1,20 et 3,00. Les valeurs de Mn, Mw et *Ð* sont mesurées selon la méthode décrite dans le paragraphe II.1.

La chaîne copolymère A a pour autre caractéristique essentielle de porter une fonction B en extrémité. La fonction B peut être attachée à la chaîne copolymère directement par une liaison covalente ou par l'intermédiaire d'un groupe divalent de formule (I)

-(CH₂)_{w}- (I)

dans laquelle w est un nombre entier de 1 à 50, préférentiellement de 1 à 11. Avantageusement w est égal à 3.

La fonction B est choisie dans le groupe constitué par les fonctions B1 et B2. B1 est choisie dans le groupe constitué par N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O). B2 est une fonction dérivant de B1.

On entend par fonction dérivant de B1 une fonction qui est obtenue par modification de la fonction B1 selon les réactions connues de l'homme du métier.

La fonction B1 est avantageusement le groupe N(SiMe₂CH₂CH₂SiMe₂) ou le groupe N(SiMe₃)₂. La fonction B2 est avantageusement choisie dans le groupe constitué par les amines, les ammoniums et les cétones. Lorsque B2 est une amine, elle est obtenue typiquement par déprotection du groupe N(SiMe₂CH₂CH₂SiMe₂) ou du groupe N(SiMe₃)₂ , éventuellement suivie par une alkylation, selon des réactions bien connues de l'homme du métier. Lorsque B2 est un ammonium, elle peut être obtenue par modification des mêmes groupes N(SiMe₂CH₂CH₂SiMe₂) ou N(SiMe₃)₂ , par exemple par réaction de quaternisation selon des procédés bien connus de l'homme du métier. Lorsque B2 est une cétone, elle est obtenue avantageusement par déprotection de la fonction acétal CH(OCH₂CH₂O), procédé également bien connu de l'homme du métier.

Selon un mode de réalisation préférentiel de l'invention, B2 est une amine, primaire, secondaire ou tertiaire, de préférence une amine primaire.

Selon un mode de réalisation particulier de l'invention, la fonction B est la fonction B1.

Selon une variante de l'invention, le copolymère porte une deuxième fonction, fonction Z. La fonction Z est portée de préférence sur une extrémité de chaîne du copolymère A. Lorsque le copolymère porte une fonction B et une fonction Z toutes les deux en extrémité de chaîne, les deux fonctions sont portées respectivement par des extrémités différentes : le copolymère est dit téléchélique ou hétérotéléchélique dans le cas particulier où Z est différent de B.

Selon l'un quelconque des modes de réalisation de cette variante, la fonction Z est de préférence choisie parmi les halogènes, les groupes comportant une liaison insaturée carbone-carbone et les fonctions contenant un hétéroatome choisi parmi S, N, Si, O, B et P.

Selon l'un quelconque des modes de réalisation de l'invention, le copolymère est préférentiellement linéaire.

Le copolymère conforme à l'invention peut être préparé par le procédé décrit ci-après.

Le procédé pour préparer le copolymère a pour caractéristique essentielle de comprendre les étapes (a) et (b), et le cas échéant l'étape (c) suivantes :
- (a) la préparation d'un composé de formule (II)

   Y(A-(CH₂)_{d}-B1)_{y} (II)

   dans laquelle
   ∘ y est égal à 2 ou 3,
   ∘ lorsque y = 2, le symbole Y est un alcalino-terreux ou le zinc, et lorsque y = 3, Y est l'aluminium ;
   ∘ d est un nombre entier de 0 à 50, avantageusement de 0 à 11;
   ∘ le symbole A représentant la chaîne copolymère A décrite précédemment ;
   ∘ B1 est choisi dans le groupe constitué par N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O)
- (b) une réaction de terminaison de la chaîne copolymère A,
- (c) une réaction de modification de la fonction B1, notamment pour former la fonction B2.

Selon une variante du procédé, l'étape (b) est une réaction du composé de formule (II) avec un composé comportant un proton acide, dit stoppeur (ou agent de stoppage). A titre de stoppeur, on peut citer l'eau, les acides carboxyliques notamment les acides gras en C₂-C₁₈ comme l'acide acétique, l'acide stéarique, les alcools aliphatiques ou aromatiques, comme le méthanol, l'éthanol, l'isopropanol, des antioxydants phénoliques, des amines primaires ou secondaires comme des antioxydants comportant le motif diaminophénylène. Cette variante du procédé permet de synthétiser un copolymère comprenant une chaîne copolymère monofonctionnelle, puisque la chaîne copolymère A du copolymère porte la fonction B1 en extrémité de chaîne apportée par l'étape (a) du procédé.

Selon une autre variante de l'invention, l'étape (b) est une réaction du composé de formule (II) avec un agent de fonctionnalisation. La réaction de fonctionnalisation fait intervenir la rupture de la liaison formée par Y et le carbone à la fois adjacent à Y et appartenant à la chaîne copolymère A. L'agent de fonctionnalisation est choisi par l'homme du métier pour sa réactivité vis-à-vis de cette liaison et pour la nature chimique de la fonction Z qu'il porte. L'étape (b) étant alors une réaction de fonctionnalisation, le procédé permet d'accéder selon cette autre variante à un copolymère téléchélique ou hétéro-téléchélique, puisqu'une extrémité de la chaîne copolymère A porte la fonction B1 apportée par l'étape (a), et l'autre extrémité la fonction Z apportée par l'étape (b).

Généralement, la réaction de terminaison est conduite par la mise en contact du milieu réactionnel de polymérisation avec un agent de terminaison, qu'il soit stoppeur ou agent de de fonctionnalisation, à un taux de conversion des monomères choisi par l'homme du métier selon la macrostructure souhaitée du copolymère.

L'étape (c) est une étape optionnelle selon que l'on souhaite ou non transformer la fonction B1, notamment en la fonction B2. Le mode de réalisation du procédé qui comprend l'étape (c) peut s'appliquer aux deux variantes du procédé décrites précédemment. Dans certains modes de réalisation très particuliers, l'étape (c) peut être conduite simultanément à l'étape (b). A titre d'exemple où l'étape (b) et (c) sont concomitantes, on peut citer le cas où l'étape (b) est une réaction de terminaison par un composé acide et l'étape (c) est une réaction de déprotection de la fonction B1 dans des conditions acides.

Selon un mode de réalisation de l'invention particulier, l'étape (c) est une réaction de déprotection de la fonction B1 en B2, conduite en milieu acide ou basique selon la nature chimique de la fonction B1 à déprotéger. Par exemple, le groupe triméthylsilyle qui protège la fonction amine peut être hydrolysé en milieu acide ou basique. Le choix des conditions de déprotection est fait judicieusement par l'homme du métier en tenant compte de la structure chimique du substrat à déprotéger.

Le copolymère préparé selon le procédé conforme à l'invention peut être séparé du milieu réactionnel de l'étape (b) ou (c) selon des procédés bien connus de l'homme du métier, par exemple par une opération d'évaporation du solvant sous pression réduite ou par une opération de stripping à la vapeur d'eau.

L'étape (a) du procédé conforme à l'invention requiert la préparation du composé de formule (II). Le composé de formule (II) est préparé par la copolymérisation d'un mélange monomère contenant le monomère M1 et le monomère M2 en la présence d'un système catalytique comprenant un agent de transfert de formule (III) et un catalyseur métallocène,

Y((CH₂)_{d}B1)_{y} (III)

Y, B1, d et y étant tels que définis précédemment, en particulier dans les différents modes de réalisation décrits de l'invention.

La copolymérisation d'un mélange monomère contenant un diène conjugué et un monooléfine tel que l'éthylène, une α-monooléfines ou leur mélange peut être conduite conformément aux demandes de brevet EP1 092 731, WO 2004035639, WO2005028526, WO 2007054223 et WO 2007054224. sachant que le co-catalyseur des systèmes catalytiques décrits dans ces documents est remplacé dans le cas présent par l'agent de transfert. Par ailleurs, l'homme du métier adapte les conditions de polymérisation décrites dans ces documents de manière à atteindre la microstructure et la macrostructure souhaitées de la chaîne copolymère A. Selon l'un quelconque des modes de réalisation de l'invention, le rapport molaire de l'agent de transfert sur le métal Met constituant le catalyseur métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Par ailleurs, l'homme du métier adapte les conditions de polymérisation et les concentrations en chacun des réactifs (constituants du système catalytiques, monomères, stoppeur), selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

Le monomère M1 est de préférence un monomère choisi dans le groupe constitué par le 1,3-butadiène, l'isoprène et leur mélange, de manière plus préférentielle est le 1,3-butadiène. Le monomère M2 est l'éthylène ou un mélange d'éthylène et d'une α-monooléfine. A titre d'α-monooléfine conviennent celles citées précédemment, à savoir les α-monooléfines aliphatiques ou aromatiques, particulièrement les α-monooléfines aliphatiques ayant de préférence 3 à 18 atomes de carbone telles que le propène, le 1-butène, le 1-hexène, le 1-octène, le 1-hexadécène ou leurs mélanges.

L'agent de transfert est de préférence de formule (III-a) ou (III-b), avec d allant de 1 à 11, de préférence étant égal à 3. Le mode de réalisation dans lequel d est égal à 3 est avantageux notamment du point de vue de l'accessibilité de l'agent de transfert, puisque le réactif nécessaire à sa synthèse est un produit commercial ou un produit lui aussi facilement accessible par synthèse.

Mg[(CH₂)_{d}-N(SiMe₂CH₂CH₂SiMe₂)]₂ (III-a)

Mg[(CH₂)_{d}-N(SiMe₃)₂]₂ (III-b)

Lorsque Y est un alcalino-terreux ou le zinc, l'agent de transfert peut être préparé par réaction de la forme métallique de Y, dit réactif, avec un substrat de formule X-(CH₂)_{d}-B1, B1 et d étant tel que définis précédemment, X étant un halogène, de préférence un atome de brome. Lorsque Y est Al, l'agent de transfert de formule (III) est préparé de préférence par réaction de AlCl₃ avec un dérivé d'un composé de formule X-(CH₂)_{d}-B1 décrit ci-dessus, ce dérivé pouvant être un sel ionique à base de lithium ou de potassium, par exemple de formule respective Li(CH₂)_{d}-B1 ou K(CH₂)_{d}-B1 ou leur forme complexée avec un solvant, comme cela est bien connu dans les composés organométalliques à base de lithium ou de potassium.

L'agent de transfert est typiquement synthétisé dans des conditions opératoires généralement utilisées dans la synthèse des composés organométalliques, c'est-à-dire dans des conditions anhydres et sous atmosphère inerte, dans des solvants éthers, par un ajout contrôlé d'une solution du substrat, tel qu'un goutte à goutte, au réactif en suspension dans le solvant. La récupération de l'agent de transfert se fait de manière connue en soi, par exemple par évaporation du solvant de synthèse ou par recristallisation dans un solvant ou un mélange de solvants.

Selon une première variante du procédé, le catalyseur métallocène est un métallocène comportant le motif (en anglais « moiety ») de formule (IV-1)

P(Cp¹)(Cp²)Met (IV-1)

Met étant un atome de métal du groupe 4 ou un atome de métal de terre rare,
Cp¹ et Cp², identiques ou différents, étant choisis dans le groupe constitué par les groupes cyclopentadiényles, les groupes indényles et les groupes fluorényles, les groupes pouvant être substitués ou non,

P étant un groupe pontant les deux groupes Cp¹ et Cp², et comprenant au moins un atome de silicium ou de carbone.

Dans la formule (IV-1), l'atome Met est relié à une molécule de ligand constituée des deux groupes Cp¹ et Cp² reliés entre eux par le pont P.

Selon une deuxième variante du procédé, le catalyseur métallocène est un métallocène comportant le motif (en anglais « moiety ») de formule (IV-2)

(Cp¹)(Cp²)Met (IV-2)

Met étant un atome de métal du groupe 4 ou un atome de métal de terre rare,
Cp¹ et Cp², identiques ou différents, étant choisis dans le groupe constitué par les groupes cyclopentadiényles, les groupes indényles et les groupes fluorényles, les groupes pouvant être substitués ou non.

On rappelle que les terres rares sont des métaux et désignent les éléments scandium, yttrium et les lanthanides dont le numéro atomique varie de 57 à 71.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

Dans le cas d'un métallocène ponté de formule (IV-1), à titre de groupe cyclopentadiényle substitué, on peut citer particulièrement ceux substitués en position 2 ou 3, tels que les groupes tétraméthylcyclopentadiényle, 3-triméthylsilylcyclopentadiényle. La position 2 (ou 5) désigne la position de l'atome de carbone qui est adjacent à l'atome de carbone auquel est attaché le pont P, comme cela est représenté dans le schéma ci-après.

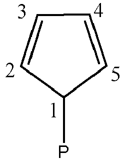

Dans le cas d'un métallocène ponté de formule (IV-1), à titre de groupe indényle substitué en position 2, on peut citer particulièrement ceux substitués en position 2 tels que les groupes 2-méthylindényle, 2-phénylindényle. La position 2 désigne la position de l'atome de carbone qui est adjacent à l'atome de carbone auquel est attaché le pont P, comme cela est représenté dans le schéma ci-après.

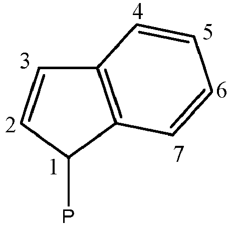

Dans le cas d'un métallocène ponté de formule (IV-1), à titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

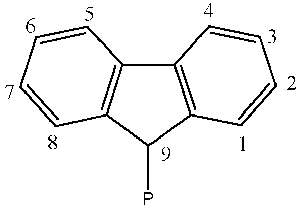

Dans le cas d'un métallocène non ponté de formule (IV-2), à titre de groupe cyclopentadiényle substitué, on peut citer les groupes 3-triméthylsilylcyclopentadiényle, tétraméthylcyclopentadiényle ; à titre de groupe indényle substitué, on peut citer les groupes méthylindényle, phénylindényle ; à titre de groupes fluorényles substitués, on peut citer les groupes 2,7-ditertiobutyle-fluorényle et 3,6-ditertiobutyle-fluorényle.

Avantageusement, que le métallocène soit de formule (IV-1) ou (IV-2), Cp¹ représente un groupe cyclopentadiényle substitué ou non substitué et Cp² représente un groupe fluorényle substitué ou non substitué. Mieux, Cp¹ représente un groupe cyclopentadiényle non substitué et Cp² représente un groupe fluorényle non substitué.

De préférence, le symbole P, désigné sous le terme de pont, répond à la formule MR¹R², M représentant un atome de silicium ou de carbone, de préférence un atome de silicium, R¹ et R², identiques ou différents, représentant un groupe alkyle comprenant de 1 à 20 atomes de carbone. De manière plus préférentielle, le pont P est de formule SiR¹R², R¹ et R², étant tels que définis précédemment. De manière encore plus préférentielle, il répond à la formule SiMe₂.

Que le métallocène soit de formule (IV-1) ou (IV-2), le symbole Met représente de préférence un atome de métal de terre rare, de manière plus préférentielle un atome de lanthanide (Ln) dont le numéro atomique va de 57 à 71, de manière encore plus préférentielle un atome de néodyme (Nd).

Selon un mode de réalisation préférentiel de l'invention, le catalyseur métallocène est de formule (IV-1a) ou (IV-2b)

{P(Cp¹)(Cp²)Met-G}_{b} (IV-1a)

{(Cp¹)(Cp²)Met-G}_{b} (IV-2b)

dans lesquelles
- Met représente un atome de métal de terre rare,
- le symbole G désignant un halogène X choisi dans le groupe constitué par le chlore, le fluor, le brome et l'iode, ou un groupe comprenant le motif borohydrure BH₄,
- P, Cp¹ et Cp² étant tels que définis précédemment,
- b étant égal à 1 ou 2.

Que le métallocène soit de formule (IV-1a) ou (IV-2b), le symbole Met représente de préférence un atome de lanthanide (Ln) dont le numéro atomique va de 57 à 71, de manière plus préférentielle un atome de néodyme (Nd).

Le métallocène peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans les demandes WO 2007054223 et WO 2007054224. Le métallocène peut être préparé de façon traditionnelle par un procédé analogue à celui décrit dans les documents EP 1 092 731, WO 2007054223 et WO 2007054224, notamment par réaction dans des conditions inertes et anhydres du sel d'un métal alcalin du ligand avec un sel de terre rare comme un halogénure ou un borohydrure de terre rare, ou un sel d'un métal du groupe 4 dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Avantageusement, que le métallocène soit de formule (IV-1a) ou (IV-2b), Cp¹ représente un groupe cyclopentadiényle substitué ou non substitué et Cp² représente un groupe fluorényle substitué ou non substitué. Mieux, Cp¹ représente un groupe cyclopentadiényle non substitué et Cp² représente un groupe fluorényle non substitué. Le groupe fluorényle non substitué est de formule C₁₃H₈.

Selon l'un quelconque des modes de réalisation décrits, le catalyseur métallocène est de préférence un métallocène borohydrure de lanthanide ou un métallocène halogénure de lanthanide, notamment un métallocène chlorure de lanthanide.

Selon un mode de réalisation particulièrement préférentiel de l'invention, le symbole G désigne le chlore ou le groupe de formule (IV)

(BH₄)_{(1+c)-}L_{c}-Nₓ (IV)

dans laquelle
- L représente un métal alcalin choisi dans le groupe constitué par le lithium, le sodium et le potassium
- N représente une molécule d'un éther,
- x, nombre entier ou non, est égal ou supérieur à 0,
- c, nombre entier, est égal ou supérieur à 0.

Comme éther convient tout éther qui a le pouvoir de complexer le métal alcalin, notamment le diéthyléther et le tétrahydrofuranne.

De manière plus préférentielle, le catalyseur métallocène est de formule (IV-3a) ou (IV-3b) ou (IV-3c).

[Me₂Si(C₅H₄)(C₁₃H₈)NdCl] (IV-3a)

[Me₂Si(C₅H₄)(C₁₃H₈)Nd(BH₄)₂Li(THF)] (IV-3b)

[Me₂Si(C₅H₄)(C₁₃H₈)Nd(BH₄)(THF)] (IV-3c)

Ainsi, l'utilisation de l'agent de transfert, autre objet de l'invention, permet d'accéder aux copolymères conformes à l'invention, qu'ils soient monofonctionnels en extrémité de chaîne ou téléchéliques. De tels copolymères répondent en particulier aux formules suivantes (V) et (VI)

H-A-(CH₂)_{d}-B (V)

Z-A-(CH₂)_{d}-B (VI)

H représentant un atome d'hydrogène ;
A représentant la chaîne copolymère telle que définie précédemment selon l'un quelconque des modes de réalisation de l'invention ;
B et d étant tels que définis précédemment selon l'un quelconque des modes de réalisation de l'invention.

Un objet décrit par la présente est le composé de formule (II), dont la préparation est requise dans l'étape (a) du procédé conforme à l'invention,

Y(A-(CH₂)_{d}-B1)_{y} (II)

y étant égal à 2 ou 3,
lorsque y = 2, le symbole Y étant un alcalino-terreux ou le zinc, et lorsque y = 3, Y étant l'aluminium ;
d étant un nombre entier de 0 à 50, avantageusement de 0 à 11 ;
le symbole A représentant la chaîne copolymère A définie selon l'un quelconque des modes de réalisation décrits,
B1 étant choisi dans le groupe constitué par N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O).

Plus particulièrement, le composé de formule (II) est tel que Y est Mg, B1 représente le groupe N(SiMe₂CH₂CH₂SiMe₂) ou le groupe N(SiMe₃)₂ et d va de 1 à 11 ou égal à 3.

Le copolymère conforme à l'invention, notamment lorsqu'il est un élastomère, peut être utilisé dans une composition de caoutchouc, en particulier dans un produit semi-fini pour pneumatique.

La composition de caoutchouc conforme à l'invention peut contenir en plus du copolymère tout ingrédient traditionnellement utilisé dans une composition de caoutchouc pour pneumatique, comme par exemple une charge renforçante telle qu'un noir de carbone ou une silice, un système plastifiant, un système de réticulation, en particulier de vulcanisation, un ou des antioxydants.

Les caractéristiques précitées de la présente invention, ainsi que d'autres, seront mieux comprises à la lecture de la description suivante de plusieurs exemples de réalisation de l'invention, donnés à titre illustratif et non limitatif.

### Il. EXEMPLES DE REALISATION DE L'INVENTION

### II.1-Méthodes de caractérisation :

### Chromatographie d'exclusion stérique (SEC) :

Les analyses de SEC ont été réalisées à haute température (HT-SEC) en utilisant un appareil Viscotek (de Malvern Instruments) équipé avec 3 colonnes (PLgel Olexis 300 mm x 7 mm I. D. de Agilent Technologies) et de 3 détecteurs (réfractomètre, viscosimètre et diffusion de la lumière). 200 µL d'une solution de l'échantillon à une concentration de 5 mg mL⁻¹ ont été élués dans le 1,2,4-trichlorobenzene en utilisant un débit de 1 mL min⁻¹ à 150°C. La phase mobile a été stabilisée par du 2,6-di(tert-butyl)-4-methylphénol (200 mg L⁻¹). Le logiciel OmniSEC a été utilisé pour l'acquisition et l'analyse des données. Les masses molaires moyennes en nombre Mn et l'indice de polydispersité *Ð* ont été calculées par calibration universelle en utilisant des standards de polystyrène.

### Résonance magnétique nucléaire (RMN) :

La spectroscopie RMN haute résolution a été effectuée sur un spectromètre Bruker DRX 400 opérant à 400 MHz pour le proton et 101 MHz pour le carbone 13. Les acquisitions ont été faites à 363 K en utilisant une sonde 5 mm QNP pour le ¹H et une sonde PSEX 10 mm pour le ¹³C NMR. Les échantillons ont été analysés à une concentration de 5-15 % en masse. Un mélange de tétrachloroéthylène (TCE) et de benzène deutéré (C6D6) (2/1 v/v) a été utilisé comme solvant. Les déplacements chimiques sont donnés en unité ppm, relativement au tétraméthylsilane comme référence interne pour la RMN 1H et au signal de méthylène à 30 ppm des enchaînement d'unités éthylène pour le ¹³C.

La microstructure des copolymères éthylène/butadiène est déterminée par RMN ¹³C suivant la méthode décrite dans Macromolecules 2001, 34, 6304-6311.

### II.2-Exemple de préparation d'un agent de transfert :

### Exemple 1 : préparation de l'agent de transfert MgR₂(R= 1-propyl-2,2,5,5-tétraméthyl-1-aza-2,5-disilacyclopentane, répondant à la formule -(CH₂)₃₋N(SiMe₂CH₂CH₂SiMe₂))

Dans un ballon de 100 mL, on introduit sous atmosphère inerte d'argon, 2,6 g (2 équivalents) de magnésium puis 50 mL de THF sec.

On additionne ensuite à température ambiante et goutte à goutte 13,3 mL (15 g, 1 équivalent) de 1-(3-bromopropyl)-2,2,5,5-tétraméthyl-1-aza-2,5-disilacyclopentane.

On récupère ensuite la solution de 1-(3-bromopropyl)-2,2,5,5-tétraméthyl-1-aza-2,5-disilacyclopentane magnésium en canulant cette solution dans un tube de Schlenk sous argon afin d'éliminer le magnésium qui n'a pas réagi.

On ajoute sur cette solution, 5,5 mL (1,2 équivalent) de dioxane afin de déplacer l'équilibre de Schlenk pour former le composé MgR₂ (R= 1-propyl-2,2,5,5-tétramethyl-1-aza-2,5-disilacyclopentane) et précipiter MgBr₂.

Cette solution est ensuite filtrée sous argon sur célite afin de récupérer MgR₂ en solution dans le THF. On ajoute 100 mL de BuzO à cette solution et le THF est distillé sous vide à température ambiante.

On obtient ainsi une solution de MgR₂ dans le Bu₂O.

### II.2-Exemples de préparation de copolymères monofonctionnels, impliquant une étape (b) de terminaison par réaction avec un composé comportant un proton acide et de façon concomitante une étape (c) de modification de la fonction :

### Exemple 2 :

Dans un ballon contenant 200 mL de toluène sec, on introduit 8,5 mL (1,96 mmol) de MgR₂ (0,23 M dans le dibutyl éther) préparé suivant l'exemple 1.

La solution est transférée sous atmosphère d'argon dans un réacteur de 250 mL.

On transfère ensuite une solution de 31,3 mg de complexe [Me₂SiFlu₂Nd(BH₄)₂Li(THF)] (Nd = 49 µmol ; Mg/Nd = 40).

L'argon est éliminé sous vide et le réacteur est pressurisé à 4 bars au moyen d'un mélange gazeux de monomère éthylène / 1,3-butadiène de composition constante (5 % molaire de 1,3-butadiène) à 70°C.

Le réacteur est dégazé au bout de 2 h de polymérisation et la température est ramenée à 20°C. Le milieu de polymérisation est versé dans une solution de méthanol/HCl 1M et est agité pendant 1 heure.

Le polymère précipité est solubilisé dans le toluène puis est précipité dans une solution méthanol pour être ainsi lavé. Le polymère est finalement séché.

On récupère 23,6 g de copolymère portant en extrémité de la chaîne copolymère la fonction NH₃Cl attachée à la chaîne par l'intermédiaire du groupe -(CH₂)₃-.

La masse molaire moyenne en nombre est déterminée par analyse HT-SEC, 150°C : *M*ₙ = 9 085 g mol⁻¹, *Ð* = 2,18.

Le spectre de RMN proton (2/1 v/vTCE/CeDe, 400 MHz, 363K) montre le signal caractéristique du méthylène en position α de l'ammonium à δ = 2,68 ppm (large, -CH₂-NH₃Cl) et celui caractéristique des protons de l'ammonium à δ = 8,59 ppm (large, -N**H**₃Cl).

La composition du copolymère est de 95,6 %mol d'éthylène. Le 1,3-butadiène est inséré à 24,7 %mol 1,4-trans, 11,0 %mol 1,2 et 64,3 %mol sous la forme de cycles.

### Exemple 3 :

Le même mode opératoire que l'exemple 2 est suivi pour la synthèse de ce copolymère mais avec un mélange de monomère à 20 %mol de 1,3-butadiène.

On récupère 7,3 g de copolymère portant en extrémité de la chaîne copolymère la fonction NH₃Cl attachée à la chaîne par l'intermédiaire du groupe -(CH₂)₃-.

La masse molaire moyenne en nombre est déterminée par analyse HT-SEC , 150 °C : *M*ₙ = 6 800 g mol⁻¹, *Ð* = 2,07.

Le spectre de RMN proton (2/1 v/vTCE/CeDe, 400 MHz, 363K) montre le signal caractéristique du méthylène en position α de l'ammonium à δ = 2,68 ppm (large, -C**H**₂-NH₃ CI) et celui caractéristique des protons de l'ammonium à δ = 8,62 ppm (large, -N**H**₃Cl).

La composition du copolymère est de 80,0 %mol d'éthylène. Le 1,3-butadiène est inséré à 19,0 %mol 1,4-trans, 44,5 %mol 1,2 et 36,5 %mol sous la forme de cycles.

### Exemple 4 :

Le même mode opératoire que l'exemple 2 est suivi pour la synthèse de ce copolymère mais on introduit 2,2 mL (0,51 mmol) de MgR₂ (0,23 M dans le dibutyl éther) pour 31,3 mg de complexe [Me₂SiFlu₂Nd(BH₄)₂Li(THF)] (Nd = 49 µmol ; Mg/Nd = 10,3) et on utilise un mélange de monomère à 20 %mol de 1,3-butadiène.

On récupère 16,8 g de copolymère portant en extrémité de la chaîne copolymère la fonction NH₃Cl attachée à la chaîne par l'intermédiaire du groupe -(CH₂)₃-.

La masse molaire moyenne en nombre est déterminée par analyse HT-SEC, 150 °C : *M*ₙ = 25 220 g mol⁻¹, *Ð* = 2,2.

Le spectre de RMN proton (2/1 v/vTCE/C₆D₆, 400 MHz, 363K) montre le signal caractéristique du méthylène en position α de l'ammonium à δ = 2,68 ppm (large, -C**H**₂-NH₃ Cl) et celui caractéristique des protons de l'ammonium à δ = 8,62 ppm (large, -N**H**₃Cl).

La composition du copolymère est de 80,1 %mol d'éthylène. Le 1,3-butadiène est inséré à 17,5 %mol 1,4-*trans,* 45,2 %mol 1,2 et 37,3 %mol sous la forme de cycles.

### Exemple 5 :

Le même mode opératoire que l'exemple 4 est suivi pour la synthèse de ce copolymère mais la polymérisation dure cette fois 4 h.

On récupère 27,6 g de copolymère portant en extrémité de la chaîne copolymère la fonction NH₃Cl attachée à la chaîne par l'intermédiaire du groupe -(CH₂)₃-.

La masse molaire moyenne en nombre est déterminée par analyse HT-SEC, 150 °C : *M*ₙ = 39 730 g mol⁻¹, *Ð* = 2,3.

Le spectre de RMN proton (2/1 v/v TCE/C₆D₆, 400 MHz, 363K) permet d'observer le méthylène en position α de l'ammonium à δ = 2,68 ppm (large, -C**H**₂-NH₃Cl).

La composition du copolymère est de 79,3 %mol d'éthylène. Le 1,3-butadiène est inséré à 28,1 %mol 1,4-*trans,* 38,7 %mol 1,2 et 33,2 %mol sous la forme de cycles.

### Exemple 6 :

Le même mode opératoire que l'exemple 2 est suivi pour la synthèse de ce copolymère mais avec un mélange de monomère à 30 %mol de 1,3-butadiène.

On récupère 7,3 g de copolymère portant en extrémité de la chaîne copolymère la fonction NH₃Cl attachée à la chaîne par l'intermédiaire du groupe -(CH₂)₃-.

Le spectre de RMN proton (2/1 v/vTCE/C₆D₆, 400 MHz, 363K) montre le signal caractéristique du méthylène en position α de l'ammonium à δ = 2,68 ppm (large, -C**H**₂-NH₃Cl) et celui caractéristique des protons de l'ammonium à δ = 8,59 ppm (large, -N**H**₃Cl).

La composition du copolymère est de 75.3 %mol d'éthylène. Le 1,3-butadiène est inséré à 25,7 %mol 1,4-trans, 44,2 %mol 1,2 et 30.1 %mol sous la forme de cycles.

### Exemple 7 :

Dans un ballon contenant 200 mL de toluène sec, on introduit 1,24 mL (284 µmol) de MgR₂ (0,23 M dans le dibutyl éther) préparé suivant l'exemple 1. La solution est transférée sous atmosphère d'argon dans un réacteur de 250 mL. On transfère ensuite une solution contenant 30,7 mg de complexe [Me₂Si(C₅H₄)(C₁₃H₈)Nd(BH₄)₂Li(THF)] (Nd =57 µmol ; Mg/Nd = 5). L'argon est éliminé sous vide et le réacteur est pressurisé à 4 bars au moyen d'un mélange gazeux de monomère éthylène / 1,3-butadiène de composition constante (20 % molaire de 1,3-butadiène) à 80°C. Le réacteur est dégazé au bout de 90 minutes de polymérisation et la température est ramenée à 20°C. Le milieu de polymérisation est versé dans une solution de méthanol/HCl 1M et est agité pendant 1 heure. Le polymère précipité est re-solubilisé dans le toluène, puis est précipité dans une solution méthanol pour être ainsi lavé. Le polymère est finalement séché.

On récupère 9,89 g de copolymère portant en extrémité de la chaîne une fonction -NH₃Cl (ou sous forme -NH₂) attachée à la chaîne par l'intermédiaire du groupe -(CH₂)₃-. Le spectre de RMN proton (2/1 v/v TCE/C₆D₆, 400 MHz, 363K) montre le signal caractéristique du méthylène en position α de l'amine à δ = 2,53 ppm (large, -C**H**₂-NH₂) et celui du méthylène en position α de l'ammonium à δ = 2,68 ppm (large, -C**H**₂-NH₃Cl). La composition du copolymère est de 67,6 %mol d'éthylène et de 32,4% de butadiène. Le 1,3-butadiène est inséré sous deux formes, 97,4 %mol de motifs 1,4-trans et 2,6 %mol d'unités 1,2.

### II.3-Exemples de préparation de copolymères monofonctionnels, impliquant une étape (c) de modification de la fonction :

### Exemple 8, l'étape (c) étant une réaction d'hydrolyse en milieu basique :

Une fraction du polymère de l'exemple 2 est prélevée (10 g). Le polymère est solubilisé dans le toluène puis est précipité à l'aide d'une solution méthanol/NaOH (1M) et est agité pendant 1 heure à température ambiante.

Le polymère est récupéré puis lavé au méthanol et séché sous vide à 60°C.

On récupère 8,2 g de copolymère portant en extrémité de la chaîne copolymère la fonction NH₂ attachée à la chaîne par l'intermédiaire du groupe -(CH₂)₃-.

Le spectre de RMN proton (2/1 v/v TCE/C₆D₆, 400 MHz, 363K) montre la disparition des signaux caractéristiques de l'ammonium à δ = 2,68 ppm, (large, -C**H**₂-NH₃Cl) et δ = 8,59 ppm, (large, -N**H**₃Cl) au profit du signal caractéristique du méthylène en position α de l'amine à δ = 2,53 ppm (large, -C**H**₂-NH₂).

### Exemple 9, l'étape (c) étant une réaction d'hydrolyse en milieu basique :

Une fraction du polymère de l'exemple 3 est prélevée (8 g). Le polymère est solubilisé dans le toluène puis est précipité à l'aide d'une solution méthanol/NaOH (1M) et est agité pendant 1 heure à température ambiante.

Le polymère est récupéré puis lavé au méthanol et séché sous vide à 60°C.

On récupère 7,8 g de copolymère portant en extrémité de la chaîne copolymère la fonction NH₂ attachée à la chaîne par l'intermédiaire du groupe -(CH₂)₃-.

Le spectre de RMN proton (2/1 v/v TCE/C₆D₆, 400 MHz, 363K) montre la disparition des signaux caractéristiques de l'ammonium à δ = 2,68 ppm, (large, -C**H**₂-NH₃Cl) et δ = 8,62 ppm, (large, -N**H**₃Cl) au profit du signal caractéristique du méthylène en position α de l'amine à δ = 2,53 ppm (large, -C**H**₂-NH₂).

### Exemple 10, l'étape (c) étant une réaction d'hydrolyse en milieu basique :

Une fraction du polymère de l'exemple 4 est prélevée (7 g). Le polymère est solubilisé dans le toluène puis est précipité à l'aide d'une solution méthanol/NaOH (1M) et est agité pendant 1 heure à température ambiante.

Le polymère est récupéré puis lavé au méthanol et séché sous vide à 60°C.

On récupère 5,3 g de copolymère portant en extrémité de la chaîne copolymère la fonction NH₂ attachée à la chaîne par l'intermédiaire du groupe -(CH₂)₃-.

### Exemple 11, l'étape (c) étant une réaction d'hydrolyse en milieu basique :

Une fraction du polymère de l'exemple 5 est prélevée (13 g). Le polymère est solubilisé dans le toluène puis est précipité à l'aide d'une solution méthanol/NaOH (1M) et est agité pendant 1 heure à température ambiante.

Le polymère est récupéré puis lavé au méthanol et séché sous vide à 60°C.

On récupère 12,0 g de copolymère portant en extrémité de la chaîne copolymère la fonction NH₂ attachée à la chaîne par l'intermédiaire du groupe -(CH₂)₃-.

Le spectre de RMN proton (2/1 v/v TCE/C₆D₆, 400 MHz, 363K) montre la disparition du signal caractéristique de l'ammonium observé à δ = 2,68 ppm, (large, -C**H**₂-NH₃Cl) au profit du signal caractéristique du méthylène en position α de l'amine à δ = 2,53 ppm (large, -C**H**₂-NH₂).

### Exemple 12, l'étape (c) étant une réaction d'hydrolyse en milieu basique :

Une fraction du polymère de l'exemple 6 est prélevée (3 g). Le polymère est solubilisé dans le toluène puis est précipité à l'aide d'une solution méthanol/NaOH (1M) et est agité pendant 1 heure à température ambiante.

Le polymère est récupéré puis lavé au méthanol et séché sous vide à 60°C.

On récupère 2,5 g de copolymère portant en extrémité de la chaîne copolymère la fonction NH₂ attachée à la chaîne par l'intermédiaire du groupe -(CH₂)₃-.

Le spectre de RMN proton (2/1 v/v TCE/C₆D₆, 400 MHz, 363K) montre la disparition des signaux caractéristiques de l'ammonium à δ = 2,68 ppm, (large, -C**H**₂-NH₃Cl) et δ = 8,59 ppm, (large, -N**H**₃Cl) au profit du signal caractéristique du méthylène en position α de l'amine à δ = 2,53 ppm (large, -C**H**₂-NH₂).

### II.4-Exemple de préparation d'un copolymère téléchélique, impliquant une étape (b) de terminaison par réaction avec un agent de fonctionnalisation :

### Exemple 13 :

### Préparation d'un EBR téléchélique Z-EBR-(CH₂)₃-B (avec Z = I ; B = NH₃Cl) avec une alimentation contenant 20 %mol de 1,3-butadiène

Dans un ballon contenant 200 mL de toluène sec, on introduit 8,5 mL (1,96 mmol) de MgR₂ (0,23 M dans le dibutyl éther) préparé suivant l'exemple 1.

La solution est transférée sous atmosphère d'argon dans un réacteur de 250 mL.

On transfère ensuite une solution de 31,3 mg de complexe [Me₂SiFlu₂Nd(BH₄)₂Li(THF)] (Nd = 49 µmol ; Mg/Nd = 40).

L'argon est éliminé sous vide et le réacteur est pressurisé à 4 bars au moyen d'un mélange gazeux de monomère éthylène / 1,3-butadiène de composition constante (20 %molaire de 1,3-butadiène) à 70°C.

Le réacteur est dégazé au bout de 2 h de polymérisation et la température du milieu réactionnel est maintenue à 70°C.

Afin d'avoir un copolymère de référence avant la réaction avec l'agent de fonctionnalisation, en l'espèce le copolymère monofonctionnel, un prélèvement de 100 mL du milieu réactionnel est alors effectué. Ce prélèvement est versé dans une solution méthanol/HCl 1M et est agité pendant 1 heure. Le polymère de référence précipité est solubilisé dans le toluène puis est précipité dans une solution méthanol pour être ainsi lavé.

Le polymère est finalement séché.

On récupère 7,4 g de copolymère portant en extrémité de la chaîne copolymère la fonction NH₃Cl attachée à la chaîne par l'intermédiaire du groupe -(CH₂)₃-.

Le spectre de RMN proton (2/1 v/v TCE/C₆D₆, 400 MHz, 363K) montre le signal caractéristique du méthylène en position α de l'ammonium à δ = 2,68 ppm (large, -C**H**₂-NH₃Cl) et celui caractéristique des protons de l'ammonium à δ = 8,58 ppm (large, -N**H**₃Cl)
La composition du copolymère de référence est de 80,8 %mol d'éthylène. Le 1,3-butadiène est inséré à 18,7 %mol 1,4-*trans,* 39,9 %mol 1,2 et 41,4 %mol sous la forme de cycles.

Au milieu réactionnel, une solution de 3,8 g d'iode (15 mmol) dans le THF (rapport molaire l/Mg = 15) est ajoutée et le mélange est agité pendant 2 heures à 70°C.

La température est ramenée à 20°C. Le milieu de polymérisation est versé dans une solution méthanol/HCl 1M et est agité pendant 1 heure.

Le polymère précipité est solubilisé dans le toluène puis est précipité dans une solution méthanol pour être ainsi lavé.

Le polymère est finalement séché.

On récupère 6,3 g de copolymère portant à une extrémité de chaîne la fonction NH₃Cl attachée à la chaîne par l'intermédiaire du groupe -(CH₂)₃- et à l'autre extrémité de chaîne la fonction I.

Le spectre de RMN proton (2/1 v/vTCE/C₆D₆, 400 MHz, 363K) montre le signal caractéristique du méthylène en position α de l'ammonium à δ = 2,68 ppm (large, -C**H**₂-NH₃Cl) et celui caractéristique des protons de l'ammonium à δ = 8,52 ppm (large, -N**H**₃Cl) mais aussi celui caractéristique de méthylènes en position α d'un groupe iodo à δ = 2,94 ppm (multiplet, -C**H**₂-I).

## Revendications

1. Copolymère comprenant une chaîne copolymère A portant une fonction B choisie dans le groupe constitué par les fonctions B1 et B2,
• la chaîne copolymère A étant une chaîne copolymère comprenant des unités monomères M1 et des unités monomères M2, M1 étant un diène conjugué ,
• B1 étant choisie dans le groupe constitué par N(SiMe₃)₂; N(SiMe₂CH₂CH₂SiMe₂); para-C₆H4(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O);
• B2 étant une fonction dérivant de B1.
la fonction B étant portée en extrémité de la chaîne copolymère A,
M2 étant l'éthylène ou un mélange d'éthylène et d'une α-monooléfine.

2. Copolymère selon la revendication 1, dans lequel la fonction B est attachée à la chaîne copolymère A directement par une liaison covalente ou par l'intermédiaire d'un groupe divalent de formule (I)
-(CH₂)_{w}- (I)
dans laquelle w est un nombre entier de 1 à 50, de préférence w varie dans un domaine allant de 1 à 11, de manière plus préférentielle est égal à 3.

3. Copolymère selon l'une quelconque des revendications 1 à 2 dans lequel la fonction B1 est le groupe N(SiMe₂CH₂CH₂SiMe₂) ou le groupe N(SiMe₃)₂.

4. Copolymère selon l'une quelconque des revendications 1 à 3 dans lequel la fonction B2 est choisie dans le groupe constitué par les amines, les ammoniums et les cétones.

5. Copolymère selon l'une quelconque des revendications 1 à 4 dans lequel la fonction B2 est une amine, de préférence primaire.

6. Copolymère selon l'une quelconque des revendications 1 à 5 dans lequel les unités éthylène représentent plus de 50%, préférentiellement plus de 65% en mole des unités monomères du copolymère.

7. Copolymère selon l'une quelconque des revendications 1 à 6 dans lequel les unités monomères M1 contiennent plus de 80% en mole de motif résultant d'une insertion 1,4-trans de M1 dans la chaîne copolymère.

8. Procédé pour préparer un copolymère comprenant une chaîne copolymère A selon la revendication 1, lequel procédé comprend l'étape (a), l'étape (b) et le cas échéant l'étape (c) suivantes :
• (a) la préparation d'un composé de formule (II)
Y(A-(CH₂)_{d}-B1)_{y} (II)
dans laquelle
∘ y est égal à 2 ou 3,
∘ lorsque y = 2, le symbole Y est un alcalino-terreux ou le zinc, et lorsque y = 3, Y est l'aluminium ;
∘ d est un nombre entier de 0 à 50, avantageusement de 0 à 11 ;
∘ le symbole A représentant une chaîne copolymère A comprenant des unités monomères M1 et des unités monomères M2, M1 étant un diène conjugué,
∘ B1 est choisi dans le groupe constitué par N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O)
• (b) une réaction de terminaison de la chaîne copolymère A,
• (c) une réaction de modification de la fonction B1 en la fonction B2 définie selon la revendication 1, M2 étant l'éthylène ou un mélange d'éthylène et d'une α-monooléfine,
le composé de formule (II) étant préparé par la copolymérisation d'un mélange monomère contenant le monomère M1 et le monomère M2 en la présence d'un système catalytique comprenant un agent de transfert de formule (III) et un catalyseur métallocène comportant
le motif de formule (IV-1) ou (IV-2)
Y((CH₂)_{d}B1)_{y} (III)
P(Cp¹)(Cp²)Met (IV-1)
(Cp¹)(Cp²)Met (IV-2)
Met étant un atome de métal du groupe 4 ou un atome de métal de terre rare,
P étant un groupe pontant les deux groupes Cp¹ et Cp², et comprenant au moins un atome de silicium ou de carbone,
Cp¹ et Cp², identiques ou différents, étant choisis dans le groupe constitué par les groupes cyclopentadiényles, les groupes indényles et les groupes fluorényles, les groupes pouvant être substitués ou non.

9. Procédé selon la revendication 8 dans lequel l'agent de transfert est de formule (III-a) ou (III-b), avec d allant de 1 à 11.
Mg[(CH₂)_{d}-N(SiMe₂CH₂CH₂SiMe₂)]₂ (III-a)
Mg[(CH₂)_{d}-N(SiMe₃)₂]₂ (III-b)

10. Procédé selon la revendication 9 dans lequel d est égal à 3.

11. Procédé selon l'une quelconque des revendications 8 à 10 dans lequel Met représente un atome de métal de terre rare, de préférence un atome de lanthanide Ln dont le numéro atomique va de 57 à 71, de manière plus préférentielle un atome de néodyme.

12. Procédé selon l'une quelconque des revendications 8 à 11 dans lequel le catalyseur métallocène est de formule (IV-1a) ou (IV-2b)
{P(Cp¹)(Cp²)Met-G}_{b} (IV-1a)
{(Cp¹)(Cp²)Met-G}_{b} (IV-2b)
- le symbole G désignant un halogène X choisi dans le groupe constitué par le chlore, le fluor, le brome et l'iode ou un groupe comprenant le motif borohydrure BH₄
- P, Cp¹ et Cp² étant tels que définis à la revendication 8,
- Met étant tel que défini à la revendication 11,
- b étant égal à 1 ou 2.

13. Composé de formule (II) telle que définie à la revendication 8, de préférence avec Y étant Mg, B1 représentant le groupe N(SiMe₂CH₂CH₂SiMe₂) ou le groupe N(SiMe₃)₂.et d allant de 1 à 11 ou étant égal à 3.

14. Composition de caoutchouc qui comprend un copolymère défini selon l'une quelconque des revendications 1 à 7, le copolymère étant un élastomère.

## Patentansprüche

1. Copolymer, umfassend eine Copolymerkette A mit einer Funktion B aus der Gruppe bestehend aus den Funktionen B1 und B2,
• wobei es sich bei der Copolymerkette A um eine Copolymerkette handelt, die Monomereinheiten M1 und Monomereinheiten M2 umfasst, wobei es sich bei M1 um ein konjugiertes Dien handelt,
• wobei B1 aus der Gruppe bestehend aus N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O) ausgewählt ist;
• wobei es sich bei B2 um eine Funktion handelt, die sich von B1 ableitet,
wobei die Funktion B am Ende der Copolymerkette A steht,
wobei es sich bei M2 um Ethylen oder eine Mischung von Ethylen und einem α-Monoolefin handelt.

2. Copolymer nach Anspruch 1, wobei die Funktion B direkt über eine kovalente Bindung oder über eine zweiwertige Gruppe der Formel (I)
- (CH₂)_{w}- (I),
in der w für eine ganze Zahl von 1 bis 50 steht, vorzugsweise w in einem Bereich von 1 bis 11 variiert und weiter bevorzugt gleich 3 ist, an die Copolymerkette A gebunden ist.

3. Copolymer nach einem der Ansprüche 1 bis 2, wobei es sich bei der Funktion B1 um die Gruppe N(SiMe₂CH₂CH₂SiMe₂) oder die Gruppe N(SiMe₃)₂ handelt.

4. Copolymer nach einem der Ansprüche 1 bis 3, wobei die Funktion B2 aus der Gruppe bestehend aus Aminen, Ammoniumgruppen und Ketonen ausgewählt ist.

5. Copolymer nach einem der Ansprüche 1 bis 4, wobei es sich bei der Funktion B2 um ein Amin, vorzugsweise ein primäres Amin, handelt.

6. Copolymer nach einem der Ansprüche 1 bis 5, wobei die Ethylen-Einheiten mehr als 50 Mol-%, vorzugsweise mehr als 65 Mol-%, der Monomereinheiten des Copolymers ausmachen.

7. Copolymer nach einem der Ansprüche 1 bis 6, wobei die Monomereinheiten M1 mehr als 80 Mol-% Einheiten umfasst, die sich aus einer trans-1,4-Insertion von M1 in die Copolymerkette ergeben.

8. Verfahren zur Herstellung eines Copolymers, umfassend eine Copolymerkette A, nach Anspruch 1, wobei das Verfahren den folgenden Schritt (a), den folgenden Schritt (b) und gegebenenfalls den folgenden Schritt (c) umfasst:
• (a) Herstellen einer Verbindung der Formel (II)
Y(A-(CH₂)_{d}-B1)_{y} (II),
in der
o y gleich 2 oder 3 ist;
o im Fall von y = 2 das Symbol Y für ein Erdalkalimetall oder Zink steht und im Fall von y = 3 Y für Aluminium steht;
o d für eine ganze Zahl von 0 bis 50, vorteilhafterweise von 0 bis 11, steht;
o das Symbol A für eine Copolymerkette A steht, die Monomereinheiten M1 und Monomereinheiten M2 umfasst, wobei es sich bei M1 um ein konjugiertes Dien handelt;
o B1 aus der Gruppe bestehend aus N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O) ausgewählt ist;
• (b) eine Reaktion zum Abbrechen der Copolymerkette A,
• (c) eine Reaktion zum Modifizieren der Funktion B1 zu der Funktion B2 gemäß Anspruch 1, wobei es sich bei M2 um Ethylen oder eine Mischung von Ethylen und einem α-Monoolefin handelt,
wobei die Verbindung der Formel (II) durch Copolymerisation einer Monomermischung, die das Monomer M1 und das Monomer M2 enthält, in Gegenwart eines katalytischen Systems, das ein Kettenübertragungsmittel der Formel (III) und einen Metallocen-Katalysator mit der Einheit der Formel (IV-1) oder (IV-2) enthält:
Y((CH₂)_{d}B1)_{y} (III)
P(Cp¹)(Cp²)Met (IV-1)
(Cp¹)(Cp²)Met (IV-2)
zubereitet wird, wobei Met für ein Metallatom der Gruppe 4 oder ein Seltenerdmetallatom steht,
wobei P für eine Gruppe steht, die die beiden Gruppen Cp¹ und Cp² verbrückt und mindestens ein Silicium- oder Kohlenstoffatom umfasst,
wobei Cp¹ und Cp² gleich oder verschieden sind und aus der Gruppe bestehend aus Cyclopentadienylgruppen, Indenylgruppen und Fluorenylgruppen ausgewählt sind, wobei die Gruppen substituiert oder unsubstituiert sein können.

9. Verfahren nach Anspruch 8, wobei das Kettenübertragungsmittel die Formel (III-a) oder (III-b) aufweist, wobei d im Bereich von 1 bis 11 liegt:
Mg[(CH₂)_{d}-N(SiMe₂CH₂CH₂SiMe₂)]₂ (III-a)
Mg[(CH₂)_{d}-N(SiMe₃)₂]₂ (III-b).

10. Verfahren nach Anspruch 9, wobei d gleich 3 ist.

11. Verfahren nach einem der Ansprüche 8 bis 10, wobei Met für ein Seltenerdmetallatom, vorzugsweise ein Lanthanidatom Ln mit einer Ordnungszahl von 57 bis 71, weiter bevorzugt ein Neodymatom, steht.

12. Verfahren nach einem der Ansprüche 8 bis 11, wobei der Metallocen-Katalysator die Formel (IV-1a) oder (IV-2b) aufweist:
{P¹(Cp¹)(Cp²)Met-G}_{b} (IV-1a)
{(Cp¹)(Cp²)Met-G}_{b} (IV-2b)
- wobei das Symbol G für ein Halogen X aus der Gruppe bestehend aus Chlor, Fluor, Brom und Iod oder eine Gruppe, die die Borhydrid-Einheit BH₄ umfasst, steht,
- wobei P, Cp¹ und Cp² wie in Anspruch 8 definiert sind,
- wobei Met wie in Anspruch 11 definiert ist,
- wobei b gleich 1 oder 2 ist.

13. Verbindung der Formel (II) gemäß Anspruch 8, vorzugsweise wobei Y für Mg steht, B1 für die Gruppe N(SiMe₂CH₂CH₂SiMe₂) oder die Gruppe N(SiMe₃)₂ steht und d im Bereich von 1 bis 11 liegt oder gleich 3 ist.

14. Kautschukzusammensetzung, die ein Copolymer gemäß einem der Ansprüche 1 bis 7 umfasst, wobei es sich bei dem Copolymer um ein Elastomer handelt.

## Claims

1. Copolymer comprising a copolymer chain A bearing a function B selected from the group consisting of the functions B1 and B2,
• the copolymer chain A being a copolymer chain comprising monomer units M1 and monomer units M2, M1 being a conjugated diene,
• B1 being selected from the group consisting of N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O);
• B2 being a function that is derived from B1;
the function B being borne at the end of the copolymer chain A;
M2 being ethylene or a mixture of ethylene and an α-monoolefin.

2. Copolymer according to Claim 1, wherein the function B is attached to the copolymer chain A directly by a covalent bond or via a divalent group of formula (I)
-(CH₂)_{w}- (I)
wherein w is an integer from 1 to 50, preferably w varies in a range extending from 1 to 11, more preferably is equal to 3.

3. Copolymer according to any one of Claims 1 to 2, wherein the function B1 is the N(SiMe₂CH₂CH₂SiMe₂) group or the N(SiMe₃)₂ group.

4. Copolymer according to any one of Claims 1 to 3, wherein the function B2 is selected from the group consisting of amines, ammoniums and ketones.

5. Copolymer according to any one of Claims 1 to 4, wherein the function B2 is an amine, preferably a primary amine.

6. Copolymer according to any one of Claims 1 to 5, wherein the ethylene units represent more than 50 mol%, preferentially more than 65 mol% of the monomer units of the copolymer.

7. Copolymer according to any one of Claims 1 to 6, wherein the monomer units M1 contain more than 80 mol% of a moiety resulting from a trans-1,4 insertion of M1 into the copolymer chain.

8. Process for preparing a copolymer comprising a copolymer chain A according to claim 1, which process comprises step (a), step (b) and where appropriate step (c) below:
• (a) preparation of a compound of formula (II)
Y(A-(CH₂)_{d}-B1)_{y} (II)
wherein
o y is equal to 2 or 3;
o when y = 2, the symbol Y is an alkaline-earth metal or zinc, and when y = 3, Y is aluminium;
o d is an integer from 0 to 50, advantageously from 0 to 11;
o the symbol A representing a copolymer chain A comprising monomer units M1 and monomer units M2, M1 being a conjugated diene;
o B1 is selected from the group consisting of N(SiMe₃)₂; N(SiMe₂CH₂CH₂SiMe₂); para-C₆H₄(NMe₂); para-C₆H₄(OMe); para-C₆H₄(N(SiMe₃)₂); ortho-CH₂-C₆H₄NMe₂; ortho-CH₂-C₆H₄OMe; C₆F₅; C₃F₇; C₆F₁₃; CH(OCH₂CH₂O),
• (b) a reaction for terminating the copolymer chain A,
• (c) a reaction for modifying the function B1 into the function B2 defined according to claim 1, M2 being ethylene or a mixture of ethylene and an α-monoolefin,
the compound of formula (II) being prepared by the copolymerization of a monomer mixture containing the monomer M1 and the monomer M2 in the presence of a catalytic system comprising a transfer agent of formula (III) and a metallocene catalyst comprising the moiety of formula (IV-1) or (IV-2)
Y((CH₂)_{d}B1)_{y} (III)
P(Cp¹)(Cp²)Met (IV-1)
(Cp¹)(Cp²)Met (IV-2)
Met being a group 4 metal atom or a rare-earth metal atom,
P being a group that bridges the two Cp¹ and Cp² groups, and that comprises at least one silicon or carbon atom,
Cp¹ and Cp², which are identical or different, being selected from the group consisting of cyclopentadienyl groups, indenyl groups and fluorenyl groups, it being possible for the groups to be substituted or unsubstituted.

9. Process according to Claim 8, wherein the transfer agent is of formula (III-a) or (III-b), with d ranging from 1 to 11:
Mg[(CH₂)_{d}-N(SiMe₂CH₂CH₂SiMe₂)]₂ (III-a)
Mg[(CH₂)_{d}-N(SiMe₃)₂]₂ (III-b)

10. Process according to Claim 9, wherein d is equal to 3.

11. Process according to any one of Claims 8 to 10, wherein Met represents a rare-earth metal atom, preferably a lanthanide atom Ln, the atomic number of which ranges from 57 to 71, more preferentially a neodymium atom.

12. Process according to any one of Claims 8 to 11, wherein the metallocene catalyst is of formula (IV-1a) or (IV-2b):
{P(Cp¹)(Cp²)Met-G}_{b} (IV-1a)
{(Cp¹)(Cp²)Met-G}_{b} (IV-2b)
- the symbol G denoting a halogen X selected from the group consisting of chlorine, fluorine, bromine and iodine or a group comprising the BH₄ borohydride moiety,
- P, Cp¹ and Cp² being as defined in Claim 8,
- Met being as defined in Claim 11,
- b being equal to 1 or 2.

13. Compound of formula (II) as defined in Claim 8, preferably with Y being Mg, B1 representing the N(SiMe₂CH₂CH₂SiMe₂) group or the N(SiMe₃)₂ group and d ranging from 1 to 11 or being equal to 3.

14. Rubber composition that comprises a copolymer defined according to any one of Claims 1 to 7, the copolymer being an elastomer.
